# DEMANDE DE BREVET EUROPEEN

(11) **EP 1 455 206 A1**
(43) Date de publication de la demande: **08.09.2004**
(21) Numéro de dépôt: 04300098.3
(22) Date de dépôt: 26.02.2004
(51) Int. Cl.: G02B 6/16, B29D 11/00

(54) **Procédé de fabrication d'une fibre optique plastique photo-cristalline**

(30) Priorité: 04.03.2003 FR 0302637
(71) Demandeur: Nexans, 75008 Paris (FR)
(72) Inventeur: Fournier, Jérôme, 69003 Lyon (FR)
(74) Mandataire: Feray, Valérie

(57) **Abrégé**

La présente invention se rapporte à un procédé de fabrication d'une fibre optique plastique photo-cristalline (F₁) comportant, pour la fabrication de la gaine, une étape de formation d'un écoulement par une opération d'injection simultanée d'une première composition (A) liquide précurseur du polymère de gaine et durcissable sous l'action de rayonnement de type ultraviolet dans une première série de trous d'une plaque d'injection et d'une deuxième composition (B) non réactive audit rayonnement de type ultraviolet et choisie parmi une composition liquide et une composition gazeuse dans une deuxième série de trous de ladite plaque, ladite deuxième série de trous ayant une répartition sensiblement périodique et chacun des trous de la deuxième série ayant comme plus proches voisins des trous de la première série, une étape d'irradiation dudit écoulement par ledit rayonnement de type ultraviolet de manière à former ladite fibre optique plastique photo-cristalline.

## Description

La présente invention se rapporte au domaine des fibres optiques et plus précisément concerne un procédé de fabrication d'une fibre optique plastique photo-cristalline.

On connaît depuis peu des fibres optiques plastiques à trous ou photo-cristallines, ces fibres comportant une gaine comportant un arrangement périodique de cavités de diamètre microscopique, comprenant de l'air, et disposées longitudinalement dans une matrice de gaine en un matériau polymère. La périodicité de cet arrangement est rompue par un défaut crée volontairement et qui fait office de coeur de la fibre et est recouvert par la gaine, défaut de taille et de forme variable suivant l'arrangement.

La lumière peut être confinée dans le coeur du fait du guidage par réflexion à l'interface coeur/gaine (réflexion interne totale). Dans cette configuration, le coeur est généralement plein et est formé par le même matériau que celui de la matrice de gaine.

La lumière peut aussi être confinée dans le coeur par effet coupe bande photonique de la gaine (interférence constructive des rayons réfléchis et réfractés). Dans cette configuration le coeur est généralement constitué d'air, donc de plus faible indice de réfraction que l'indice de réfraction effectif de la gaine, et de diamètre plus large que celui des cavités d'air, proches les unes des autres.

Comme d'autres fibres, les fibres optiques plastiques photocristallines sont fabriquées à l'aide d'une préforme solide. Cette préforme est réalisée avec une pluralité de capillaires de polymère par exemple le polyméthyl méthacrylate (PMMA) et de joncs pleins éventuellement, ces éléments étant empilés pour donner après fibrage le réseau souhaité.

La principale difficulté dans l'utilisation d'une préforme solide réside dans le maintien de la structure de la fibre optique photo-cristalline sur toute sa longueur, les cavités ayant tendance à se déformer voire à se refermer lors du fibrage entraînant notamment des pertes optiques rédhibitoires dans la fibre.

L'invention a pour objet un procédé de fabrication continu, fiable et reproductible d'une fibre optique plastique photo-cristalline de façon à améliorer, à moindre coût, les performances d'une telle fibre c'est-à-dire à élever le niveau de transmission et/ou à élargir la bande passante.

A cet effet, l'invention propose un procédé de fabrication d'une fibre optique plastique photo-cristalline comportant un coeur en un matériau dit de coeur et une gaine recouvrant ledit coeur, la gaine étant formée d'au moins un premier arrangement sensiblement périodique de cavités en un matériau dit de cavité et disposées longitudinalement dans une matrice en un polymère dit de gaine, le procédé comportant les étapes suivantes pour la fabrication de ladite gaine:
- une étape de formation d'un écoulement par une opération d'injection simultanée:

- d'une première composition liquide précurseur dudit polymère de gaine et durcissable sous l'action d'un rayonnement de type ultraviolet dans une première série de trous d'une plaque d'injection,
- et d'une deuxième composition non réactive audit rayonnement de type ultraviolet et choisie parmi une composition liquide et une composition gazeuse dans une deuxième série de trous de ladite plaque, ladite deuxième série de trous ayant une répartition sensiblement périodique et chacun des trous de la deuxième série ayant comme plus proches voisins des trous de la première série,
- une étape d'irradiation dudit écoulement par ledit rayonnement de type ultraviolet de manière à former ladite fibre optique plastique photo-cristalline.

Le procédé selon l'invention permet de mieux contrôler la structure de la fibre optique plastique photo-cristalline et notamment l'arrangement des cavités.

L'invention repose en effet sur le fait que les compositions rentrent en contact l'une avec l'autre mais qu'il n'y a pas interdiffusion significative, le temps de contact entre les compositions étant suffisamment court dans le procédé selon l'invention notamment lorsque la vitesse de l'écoulement est élevée.

De préférence, le temps de contact entre les compositions peut être inférieur à 1 seconde.

En outre, l'arrangement de cavités de la fibre obtenue va présenter sensiblement la même géométrie que l'arrangement de la deuxième série de trous.

Par «composition liquide durcissable » on entend aussi bien une composition comprenant au moins un oligomère et/ou un polymère photoréticulable fonctionnel qu'une composition comprenant au moins un oligomère et/ou un polymère non fonctionnel en solution dans un monomère photoréticulable fonctionnel ou un mélange des deux.

Dans un premier mode de réalisation préféré de l'invention, pour la fabrication dudit coeur, l'opération d'injection simultanée comprend l'injection, dans un trou sensiblement central de ladite plaque distinct d'un trou desdites séries de trous, d'une troisième composition liquide, durcissable sous l'action de rayonnement de type ultraviolet, et de préférence identique à ladite première composition, pour simplifier la fabrication de la fibre.

Ainsi, le trou central participe à la création d'un coeur plein (rempli de matière liquide ou solide) de fibre optique photo-cristalline.

Dans un deuxième mode de réalisation préféré de l'invention, pour la fabrication dudit coeur, l'opération d'injection simultanée comprend l'injection, dans un trou sensiblement central de ladite plaque distinct d'un trou desdites séries de trous, d'une troisième composition choisie parmi une composition liquide et une composition gazeuse et qui est non réactive audit rayonnement de type ultraviolet.

Dans un mode avantageux de réalisation, pour la fabrication d'un deuxième arrangement périodique de cavités, l'opération d'injection simultanée comprend l'injection, dans une troisième série distincte de trous ayant une répartition sensiblement périodique, d'une quatrième composition liquide, non réactive audit rayonnement de type ultraviolet, et de préférence identique à ladite deuxième composition.

De cette façon, on peut obtenir une fibre optique dont la matrice de gaine contient deux types d'arrangements de cavités. Généralement les cavités du deuxième arrangement, à caractère interstitiel, sont de taille bien inférieure à celle des premières cavités et sont disposées pour entourer la plupart des premières cavités et le coeur. Un exemple de telle fibre est donné dans l'article relatif aux fibres optiques photocristallines en silice intitulé « Crystal fibre : the fibre of the future ? », OLE, Nadya Anscombe, December 2001 pages 23-25.

De manière avantageuse, le procédé peut comprendre, postérieurement à l'étape d'irradiation, au moins une étape de suppression de l'une au moins desdites compositions non réactives, ladite suppression étant réalisée de préférence par traitement thermique lorsque ladite composition non réactive est liquide,

La formation de cavités creuses (vides de matière solide ou liquide) peut être obtenue indépendamment de la formation d'un coeur creux ou simultanément à la formation d'un coeur creux.

Par ailleurs, ladite suppression laissant au moins une zone vide de matière liquide le procédé peut comprendre une étape de remplissage de ladite zone vide, par exemple avec une composition qui n'est pas coulable sous pression.

De préférence, la pression d'injection de chaque composition non réactive gazeuse peut être supérieure à la pression d'injection de la première composition.

De préférence, la viscosité de chaque composition non réactive liquide peut être supérieure à la viscosité de la première composition et de préférence inférieure à cinq fois ladite viscosité de la première composition.

De préférence, chaque composition durcissable peut contenir un premier solvant réactif de type monomère acrylique ou vinylique et/ou un premier polymère de type acrylique ou vinylique, chaque composition présentant une atténuation intrinsèque inférieure à 5 dB/m.

Le polymère peut être ou non halogéné.

En outre, chaque composition non réactive peut contenir un composé choisi parmi les gaz tels que l'azote, l'air, l'argon, parmi les solvants non réactifs tels que le xylènol, les solvants fluorés, le butylène glycol, le propylène glycol, le propanol de butyle, la cyclohexanone, les alcools aliphatiques, les lactates, parmi les huiles siliconées et parmi les polymères biodégradables tels que les polymères cellulosiques.

Les particularités et avantages de l'invention apparaîtront clairement à la lecture de la description qui suit, faite à titre d'exemple illustratif et non limitatif et en référence aux figures annexées dans lesquelles :
- la figure 1 représente schématiquement en coupe transversale une fibre optique plastique photo-cristalline obtenue par un procédé de fabrication selon un mode de réalisation préféré de l'invention,
- la figure 2 représente schématiquement la mise en oeuvre du procédé de fabrication de la fibre optique plastique photo-cristalline de la figure 1, dans le mode de réalisation préféré de l'invention, avec cône de réduction,
- la figure 3 représente schématiquement la mise en oeuvre du procédé de fabrication de la fibre optique plastique photo-cristalline de la figure 1, dans le mode de réalisation préféré de l'invention, sans cône de réduction,
- la figure 4 représente schématiquement une vue en perspective d'une plaque d'injection de structure similaire à celle utilisée dans le mode de réalisation préféré du procédé selon l'invention.

Dans toutes ces figures, les éléments communs portent les mêmes numéros de référence.

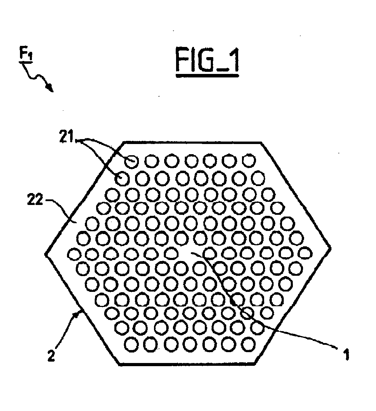

La figure 1 représente schématiquement en coupe transversale une fibre optique plastique photo-cristalline obtenue par un procédé de fabrication selon un mode de réalisation préféré de l'invention.

La fibre optique plastique photo-cristalline F₁ de diamètre compris par exemple entre 100 et 1000 µm et par exemple de structure hexagonale comporte un coeur plein 1 de diamètre par exemple compris entre 1 et 100 µm et une gaine 2 recouvrant ce coeur 1.

La gaine 2 est formée d'un arrangement périodique, hexagonal dans cet exemple, de cavités 21 par exemple sensiblement circulaires et de diamètre microscopique. On entend par diamètre microscopique, un diamètre (moyen) de cavité inférieur au micromètre, de l'ordre du micromètre ou de la dizaine de micromètres. Le diamètre est par exemple compris entre 1 et 30 micromètres environ dans cet exemple.

Ces cavités creuses (vides de matière solide ou liquide), par exemple comprenant de l'air, sont disposées longitudinalement dans une matrice 22 en un polymère de gaine obtenu par rayonnement de type ultraviolet. La distance entre deux cavités les plus proches est dans cet exemple inférieure au rayon de la cavité.

Le matériau de coeur est identique au polymère de gaine pour une simplicité de réalisation.

Dans une variante, les cavités creuses contiennent tout autre gaz.

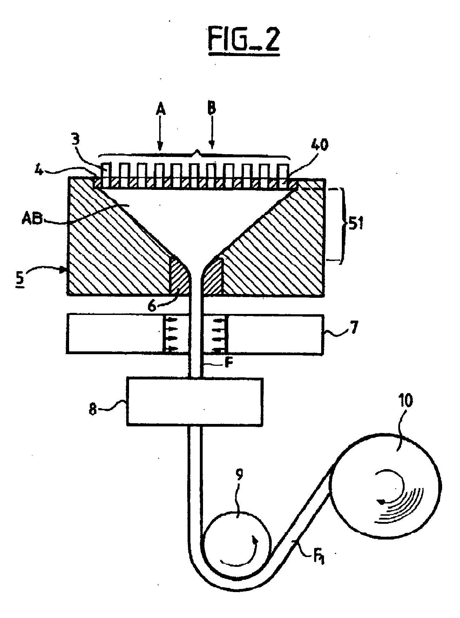

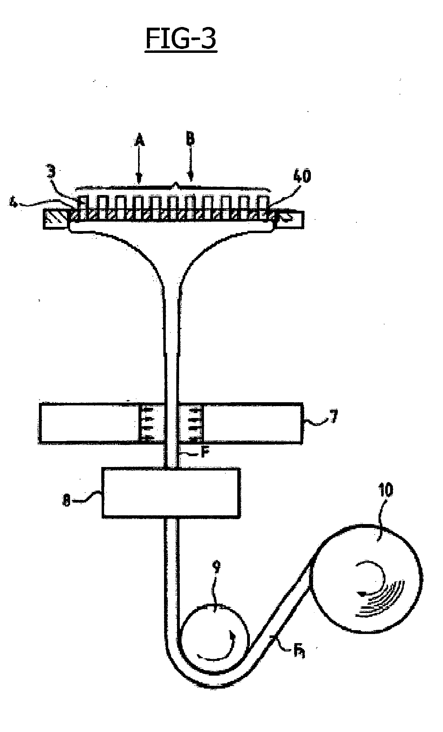

Les figures 2 et 3 représentent schématiquement la mise en oeuvre du procédé de fabrication de la fibre optique plastique photo-cristalline F₁ de la figure 1, dans le mode de réalisation préféré de l'invention.

Dans une première étape du procédé, il s'agit d'injecter simultanément au moins une composition A liquide et durcissable par un rayonnement de type ultraviolet (UV) et au moins une autre composition B non réactive au rayonnement UV responsable du durcissement de la composition A et par exemple liquide, lesquelles sont injectées sous pression dans une plaque d'injection 4 de sorte qu'un écoulement AB est formé.

Aussi, des conduits d'injection 3 ne communiquant pas les uns avec les autres sont disposés à la partie supérieure de la plaque d'injection 4 par exemple en forme de disque et munie de trous 40. Cette dernière est disposée dans une chambre d'écoulement 5 par exemple en inox (vue en coupe transversale sur la figure 2). Des pompes volumétriques (non représentées) associées à chacun des conduits 3 permettent d'assurer des pressions contrôlées pour les compositions liquides A et B, pressions par exemple de l'ordre de 6 bars.

Plus précisément, la composition A est une composition précurseur du polymère de gaine et contient un premier solvant réactif de type monomère et/ou un premier polymère de type acrylique ou vinylique, halogéné ou non halogéné. Cette première composition A présente de préférence une atténuation intrinsèque inférieure à 5 dB/m.

Dans l'exemple de la fibre F₁ à coeur plein, la composition A est également la composition précurseur du polymère de coeur.

La composition liquide B contient un composé choisi parmi les solvants non réactifs tels que le xylènol, les solvants fluorés tels que le FC-77, le butylène glycol, le propylène glycol, la cyclohexanone, parmi les huiles siliconées et parmi les polymères biodégradables tels que les polymères cellulosiques. Le composition B peut contenir de préférence un mélange d'un solvant non réactif tel que ceux énoncés ci-dessus, et d'un polymère biodégradable, dans un rapport choisi de manière à contrôler la viscosité de la composition.

La viscosité de la composition B est de préférence supérieure à la viscosité de la composition A pour optimiser la formation et le profil désiré de l'écoulement AB. La viscosité de la composition B ne dépasse pas de préférence cinq fois la viscosité de la composition A. Les viscosités sont choisies dans la gamme 200 mPa.s - 5000 mPa.s à 25°C.

Le choix de la viscosité de la composition B permet d'ajuster le diamètre des cavités de la fibre F: plus la viscosité est faible plus le diamètre des cavités de la fibre F est petit.

Ensuite, dans le mode de réalisation de la figure 2, intervient une étape de réduction du diamètre dudit écoulement AB au moyen d'une zone conique 51, ou cône de réduction, de la chambre 5 dont la limite supérieure est la limite inférieure de la plaque d'injection 4. Cette variation homothétique du diamètre permet de conserver pour l'écoulement AB le profil en concentration de la composition A et de la composition B sans interdiffusion de l'une avec l'autre.

L'écoulement AB est amené par cette zone 51 à la filière calibrée 6 qui donne l'ordre de grandeur désiré au diamètre de la fibre F. La filière 6 est une pièce amovible ce qui permet de changer aisément le calibrage sans avoir à changer de chambre 5. Selon une variante, il est possible que la filière 6 soit une partie de la chambre 5.

La filière 5 présente par exemple une structure hexagonale.

Il est possible de disposer d'un système de refroidissement cryogénique au moins en partie sur la zone conique 51 pour augmenter la viscosité de l'écoulement AB jusqu'à une valeur compatible avec son filage.

De même, il est possible de placer un dispositif calorifugé au niveau des conduits 3 jusqu'à obtention de la viscosité désirée pour la composition A et la composition B.

Il est également possible, dans une variante du mode de réalisation qui vient d'être décrit, présentée en figure 3, de supprimer la zone conique 51 de sorte que la réduction de diamètre de l'écoulement AB à la sortie de la plaque d'injection soit naturellement contrôlée par l'énergie de surface des compositions. Dans ce cas la filière 6 n'est plus nécessaire et l'écoulement se fait directement de la plaque 4.

Ultérieurement, intervient une étape d'irradiation de l'écoulement AB par une source 7 de rayonnement UV. La composition A est ainsi durcie de manière à former le polymère de gaine : la fibre optique plastique photo-cristalline F est ainsi produite.

La distance entre la source 7 de rayonnement UV et la filière 6 est à choisir en fonction des diamètres de cavités et du diamètre de fibre souhaités.

Les cavités de a fibre F contiennent la composition liquide B non durcie. De préférence, pour une meilleure propagation de la lumière dans cette fibre F, la composition B est choisie telle que son indice de réfraction est inférieur à l'indice de réfraction du polymère de gaine (composition A).

L'indice de réfraction du polymère de gaine est par exemple entre 1,3 et 1,6.A partir de cette fibre F, il est possible de réaliser la fibre F₁ par suppression de la composition liquide B. cette suppression étant réalisée de préférence par traitement thermique à l'aide d'un four 8 dans lequel la composition B s'évapore et est évacuée.

A l'aide d'un cabestan 9, la fibre optique F₁ est enroulée sur une bobine 10.

Dans une première variante du procédé selon l'invention, la composition liquide B est durcie, par tout autre moyen que la source UV 6 de rayonnement donné, pour la formation de cavités pleines.

Dans une deuxième variante du procédé selon l'invention, après retrait de la composition liquide B, un autre matériau d'indice de réfraction adapté remplit les cavités.

Dans une autre variante, la composition B est gazeuse, et de préférence la pression d'injection de la composition B est supérieure à la pression d'injection de la composition liquide A.

Dans une troisième variante du procédé selon l'invention, un trou sensiblement central de la plaque reçoit, au lieu de la composition A, une troisième composition C non réactive audit rayonnement UV, liquide ou gazeuse.

Il est ainsi possible de former une fibre optique plastique photo-cristalline à coeur creux, par suppression de ladite composition C.

La suppression est réalisée de préférence par traitement thermique par exemple identique à celui utilisé pour former des cavités creuses notamment si la composition C est liquide et est sensible ment identique à la composition B.

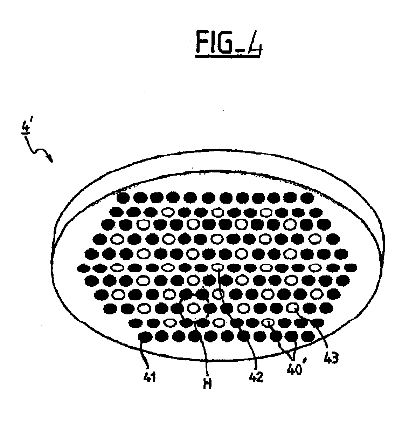

La figure 4 représente schématiquement une vue en perspective d'une plaque d'injection 4' munie de trous 40' de structure similaire à celle utilisée dans le mode de réalisation préféré du procédé selon l'invention.

La composition précurseur dudit polymère de gaine, telle que la composition A, est à injecter dans une première série de trous 41 (symbolisé en noir sur la figure 4), par exemple circulaires, disposés de façon à permettre la formation de la matrice de gaine d'une fibre optique plastique photo-cristalline selon l'invention,

Une composition par exemple précurseur d'un polymère de coeur, telle que la composition A est injectée dans un trou sensiblement central 42, par exemple circulaire, disposé pour participer à la formation du coeur plein.

Une composition non réactive audit rayonnement de type ultraviolet telle que la composition liquide B ou une composition gazeuse est à injecter dans une deuxième série de trous 43, par exemple circulaires, ayant une répartition sensiblement périodique, dans cet exemple hexagonale. Chacun des trous de la deuxième série 43 a comme plus proches voisins six trous de la première série 41 qui forment ensemble un hexagone H (représenté en pointillés).

D'une série à l'autre, la taille et la forme des trous peuvent être identiques ou distinctes.

Le diamètre de la plaque 4' est par exemple égale à quelques mm et son épaisseur vaut par exemple de trois à cinq fois le diamètre des trous. Le diamètre des trous est par exemple de l'ordre d'une centaine de microns.

Chaque trou de la plaque 4' est éventuellement prolongé par une buse.

Dans une quatrième variante du procédé selon l'invention, une troisième série de trous de dimension inférieure à ceux de la deuxième série sont réalisés dans la plaque 4' et forment un arrangement périodique. Ces trous reçoivent une composition D liquide ou gazeuse non réactive au rayonnement UV et de préférence identique à la composition B, ceci dans le but de former des cavités interstitielles en supplément des cavités initialement prévues qui sont plus larges.

Dans une fibre optique plastique obtenue selon le procédé selon l'invention, la distance entre deux cavités adjacentes, la forme des cavités, leur diamètre, leur nombre et leur arrangement sensiblement périodique sont ajustables par modification des deuxième et/ou première série de trous.

L'invention s'applique aussi pour la fabrication d'une fibre optique plastique photo-cristalline à coeurs multiples couplés optiquement.

## Revendications

1. Procédé de fabrication d'une fibre optique plastique photo-cristalline (F, F₁) comportant un coeur (1) en un matériau dit de coeur et une gaine (2) recouvrant ledit coeur, la gaine étant formée d'au moins un premier arrangement sensiblement périodique de cavités (21) en un matériau dit de cavité et disposées longitudinalement dans une matrice (22) en un polymère dit de gaine, le procédé comportant les étapes suivantes pour la fabrication de ladite gaine:
- une étape de formation d'un écoulement par une opération d'injection simultanée:
- d'une première composition liquide précurseur (A) dudit polymère de gaine et durcissable sous l'action d'un rayonnement de type ultraviolet dans une première série de trous (42) d'une plaque d'injection (4, 4'),
- et d'une deuxième composition (B) non réactive audit rayonnement de type ultraviolet et choisie parmi une composition liquide et une composition gazeuse dans une deuxième série de trous de ladite plaque (4, 4'), ladite deuxième série de trous (43) ayant une répartition sensiblement périodique et chacun des trous de la deuxième série ayant comme plus proches voisins des trous de la première série,une étape d'irradiation dudit écoulement par ledit rayonnement de type ultraviolet de manière à former ladite fibre optique plastique photo-cristalline.

2. Procédé de fabrication d'une fibre optique plastique photo-cristalline selon la revendication 1 **caractérisé en ce que** le temps de contact entre les compositions (A, B)est inférieur à 1 seconde.

3. Procédé de fabrication d'une fibre optique plastique photo-cristalline selon l'une des revendications 1 ou 2 **caractérisé en ce que**, pour la fabrication dudit coeur, l'opération d'injection simultanée comprend l'injection, dans un trou sensiblement central (42) de ladite plaque distinct d'un trou desdites séries de trous, d'une troisième composition liquide (A) etdurcissable sous l'action d'un rayonnement de type ultraviolet, et de préférence identique à ladite première composition.

4. Procédé de fabrication d'une fibre optique plastique photo-cristalline selon l'une des revendications 1 ou 2 **caractérisé en ce que**, pour la fabrication dudit coeur, l'opération d'injection simultanée comprend l'injection, dans un trou sensiblement central de ladite plaque distinct d'un trou desdites séries de trous, d'une troisième composition choisie parmi une composition liquide et une composition gazeuse et qui est non réactive audit rayonnement de type ultraviolet.

5. Procédé de fabrication d'une fibre optique plastique photo-cristalline selon l'une des revendications 1 à 4 **caractérisé en ce que**,pour la fabrication d'un deuxième arrangement périodique de cavités, l'opération d'injection simultanée comprend l'injection, dans une troisième série distincte de trous ayant une répartition sensiblement périodique, d'une quatrième composition choisie parmi une composition liquide et une composition gazeuse non réactive audit rayonnement de type ultraviolet, de préférence identique à ladite deuxième composition.

6. Procédé de fabrication d'une fibre optique plastique photo-cristalline selon l'une des revendications 1 à 5 **caractérisé en ce qu'**il comprend, postérieurement à ladite étape d'irradiation, au moins une étape de suppression de l'une au moins desdites compositions non réactives et, ladite suppression étant réalisée de préférence par traitement thermique lorsque ladite composition non réactive est liquide,.

7. Procédé de fabrication d'une fibre optique plastique photo-cristalline selon la revendication 6 **caractérisé en ce que**, ladite suppression laissant au moins une zone vide de matière liquide, il comprend une étape de remplissage de ladite au moins zone.

8. Procédé de fabrication d'une fibre optique plastique photo-cristalline selon l'une des revendications 1 à 7 **caractérisé en ce que**, la pression d'injection de chaque composition non réactive gazeuse est supérieure à la pression d'injection de la première composition

9. Procédé de fabrication d'une fibre optique plastique photo-cristalline selon l'une des revendications 1 à 8 **caractérisé en ce que**, la viscosité de chaque composition non réactive liquide (B) est supérieure à la viscosité de la première composition (A) et de préférence inférieure à cinq fois ladite viscosité de la première composition.

10. Procédé de fabrication d'une fibre optique plastique photo-cristalline selon l'une des revendications 1 à 9 **caractérisé en ce que** chaque composition durcissable (A) contient un premier solvant réactif de type monomère acrylique ou vinylique et/ou un premier polymère de type acrylique ou vinylique, la composition présente une atténuation intrinsèque inférieure à 5dB/m,
et **en ce que** chaque composition non réactive (B) contient un composé choisi parmi les gaz tels que l'azote, l'air, l'argon, parmi les solvants non réactifs tels que le xylène, le xylènol, le propanol de butyle, la cyclohexanone, les alcools aliphatiques, les lactates, parmi les solvants fluorés, le butylène glycol, le propylène glycol, parmi les huiles siliconées et parmi les polymères biodégradables tels que les polymères cellulosiques.
